**Europäisches Patentamt**

**European Patent Office**

**Office européen des brevets**

(19)

(11) Veröffentlichungsnummer: **0 348 685 B1**

(12) # EUROPÄISCHE PATENTSCHRIFT

(45) Veröffentlichungstag der Patentschrift:
14.08.91 Patentblatt 91/33

(21) Anmeldenummer: **89109999.6**

(22) Anmeldetag: **02.06.89**

(51) Int. Cl.⁵: **F16L 33/26, B23K 31/02, F16L 13/02**

(54) **Schweissverbindung zwischen einem Metallschlauch und einem hohlzylindrischen Anschlussstück aus Metall.**

(30) Priorität: **30.06.88 DE 3822064**

(43) Veröffentlichungstag der Anmeldung:
**03.01.90 Patentblatt 90/01**

(45) Bekanntmachung des Hinweises auf die Patenterteilung:
**14.08.91 Patentblatt 91/33**

(84) Benannte Vertragsstaaten:
**BE DE ES FR GB NL**

(56) Entgegenhaltungen:
**WO-A-81/00748
DE-A- 2 608 662
DE-A- 3 303 567
DE-B- 2 502 423
FR-A- 2 564 939
US-A- 4 200 218**

(73) Patentinhaber: **Witzenmann GmbH
Metallschlauch-Fabrik Pforzheim
Östliche Karl-Friedrich-Strasse 134
W-7530 Pforzheim (DE)**

(72) Erfinder: **Van den Bogaert, Lucas
Sint Rochusstraat 186
B-2100 Deurne (BE)**
Erfinder: **Feray, Patrice
Rechtstraat 16
B-2570 Duffel (BE)**
Erfinder: **Kraayenbrink, Louis
Tilburgseweg 16
B-2391 Poppel (BE)**

(74) Vertreter: **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1 (DE)**

EP 0 348 685 B1

## Beschreibung

Die Erfindung betrifft eine Schweißverbindung zwischen einem ringgewellten Metallschlauch und einem im wesentlichen hohlzylindrischen Anschlußstück aus Metall, wobei das Schlauchende stirnseitig mit der ihm zugewandten Stirnkante des Anschlußstückes verbunden ist (siehe z.B. DE-A-2608662 oder FR-A-2564939).

Bei derartigen bekannten Schweißverbindungen weist das Anschlußstück eine ebene Stirnkante auf, gegen die der Metallschlauch unter Zuhilfenahme von Zusatzwerkstoff angeschweißt ist. Soweit dabei der Metallschlauch von einer Metalldrahtumflechtung in Form eines sogenannten Geflechtsschlauches umgeben ist, ist das jeweilige Ende dieses Geflechtsschlauches bei der genannten Schweißverbindung mit einbezogen.

Die so gebildete Schweißverbindung führt zu einer erheblichen Materialanhäufung im Schweißbereich und gegebenenfalls zum gegenseitigen Anschluß dreier Bauteile, die in ihrer jeweiligen Art und Gestaltung aus der Schweißnaht herauslaufen, wobei örtliche Spannungsspitzen und damit das Auftreten von bevorzugter Bruchgefahr entstehen.

Darüber hinaus ist die Bildung von Spalten oder Hohlräumen nicht ausgeschlossen, die bei der Hindurchleitung von korrosiven Materialien zur Entstehung von Spaltkorrosion führen können.

Schließlich bedingt diese bekannte Schweißverbindung einen verhältnismäßig hohen Aufwand an Schweißenergie und Schweißmaterial, wobei es außerdem nicht einfach ist, die miteinander zu verschweißenden Teile gegenseitig sauber in Position zu bringen.

Aufgabe der Erfindung ist es, eine Schweißverbindung der eingangs genannten Art so zu gestalten, daß Spalten und Hohlräume als Voraussetzung für das Auftreten von Spaltkorrosion vermieden sind und sich insgesamt ein harmonischer Übergang zwischen Anschlußstück und Metallschlauch zur Vermeidung von Spannungsspitzen ergibt, wobei insbesondere der Aufwand an Schweißmaterial und Schweißenergie erheblich herabgesetzt werden sollen bei gleichzeitiger schweißtechnischer Vereinfachung der Verbindung.

Diese Aufgabe ist erfindungsgemäß dadurch gelöst, daß die Stirnkante des Anschlußstückes als sich gegen sein freies Ende hin zu einer schmalen Kante verjüngender und aus der achssparallelen Erstreckung bogenförmig im wesentlichen nach radial außen gerichtet auslaufender Bund ausgebildet ist, und daß der Schlauch mit der Kante einer von einem Wellenberg nach radial innen gerichteten Wellenflanke mit der Stirnkante des Anschlußstückes im Schutzgasschweißverfahren ohne Zusatzwerkstoff verschweißt ist. Dabei ist es vorteilhaft, daß der axiale Querschnitt der Kante des Anschlußstückes im wesentlichen der Wandstärke des Schlauches entspricht.

Durch diese erfindungsgemäßen Maßnahmen formt sich aus dem ohne weiteres als Drehteil herstellbaren Anschlußstück harmonisch der Übergang auf die Wandstärke und den Wandungsverlauf des anschließenden Wellschlauches, wobei die Kante des Anschlußstückes und die Flanke des Wellschlauches übergangslos miteinander verschweißt werden. Dabei können für die Verschweißung in an sich bekannter Weise die Materialien der miteinander zu verschweißenden Teile energiesparend Verwendung finden, ohne daß es dazu noch der Hinzufügung eines Zusatzwerkstoffes bedarf.

Außerdem entsteht auf diese Weise ein sowohl von der Weiterleitung der Kräfte als auch in strömungstechnischer Hinsicht harmonischer Übergang zwischen Anschlußstück und Metallschlauch, so daß Spalten und Hohlräume als Ausgang für die Entstehung einer Spaltkorrosion nicht mehr möglich sind.

Für die Ausbildung der erfindungsgemäßen Schweißverbindung hat es sich als vorteilhaft erwiesen, daß der Innendurchmesser des Anschlußstückes der lichten Weite des Schlauches entspricht, so daß auch von dieser Seite aus gesehen strömungstechnisch optimale Voraussetzungen geschaffen sind.

Ferner hat es sich als zweckmäßig erwiesen, daß die Wandstärke des Anschlußstückes sich axial in Richtung auf den Bund bzw. die Stirnkante verjüngend ausgebildet ist, wobei die äußere Mantelfläche des Anschlußstückes sich in Richtung auf den Bund bzw. die Stirnkante konisch verjüngend ausgebildet sein kann. Andererseits kann vorgesehen sein, daß der Innenquerschnitt des Anschlußstückes im Bereich des Bundes bzw. der Stirnkante eine geringe Erweiterung aufweist.

Diese Maßnahmen dienen dem harmonischen Querschnittsübergang gemäß der Erfindung, wobei für die Ausbildung des Bundes bzw. der Stirnkante auf der Innenseite eine Abrundung vorgesehen sein kann, die dem Rundungsverlauf eines Wellentales des Metallschlauches entspricht.

Soweit für den Metallschlauch eine Umhüllung durch eine Metalldrahtumflechtung bzw. durch einen Geflechtsschlauch aus Metalldraht vorgesehen ist, kann vorgesehen sein, daß dessen Ende auf dem Anschlußstück mit Abstand gegenüber der Verbindung zwischen Anschlußstück und dem Metallschlauch aufgeschweißt ist. Hier ist also eine Trennung zwischen Verschweißung des Metallschlauches mit dem Anschlußstück einerseits und des Geflechtsschlauches mit dem Anschlußstück andererseits vorgesehen, die die Verbindung zwischen Metallschlauch und Anschlußstück entlastet und hinsichtlich der Befestigung des Geflechtsschlauches räumlich Bewegungsfreiheit schafft.

Weitere Merkmale und Einzelheiten der Erfindung ergeben sich aus der nachfolgenden Beschreibung einer

2

Ausführungsform, die auf der Zeichnung dargestellt ist. In der Zeichnung zeigen :

| | |
|---|---|
| Figur 1 | den teilweisen axialen Halbschnitt eines Anschlußstückes ; |
| Figur 2 | das Anschlußstück gemäß Figur 1 mit vorgesetztem Metallschlauch vor dem Verschweißen ; |
| Figur 3 | Anschlußstück und Metallschlauch nach dem Verschweißen mit aufgebrachtem Metalldrahtumflechtung ; |
| Figur 4 | die Gesamtdarstellung eines Anschlußstückes mit angeschweißtem Metallschlauch, teilweise geschnitten und |
| Figur 5 | den Gegenstand gemäß Figur 4 mit zusätzlich angebrachter Metalldrahtumflechtung. |

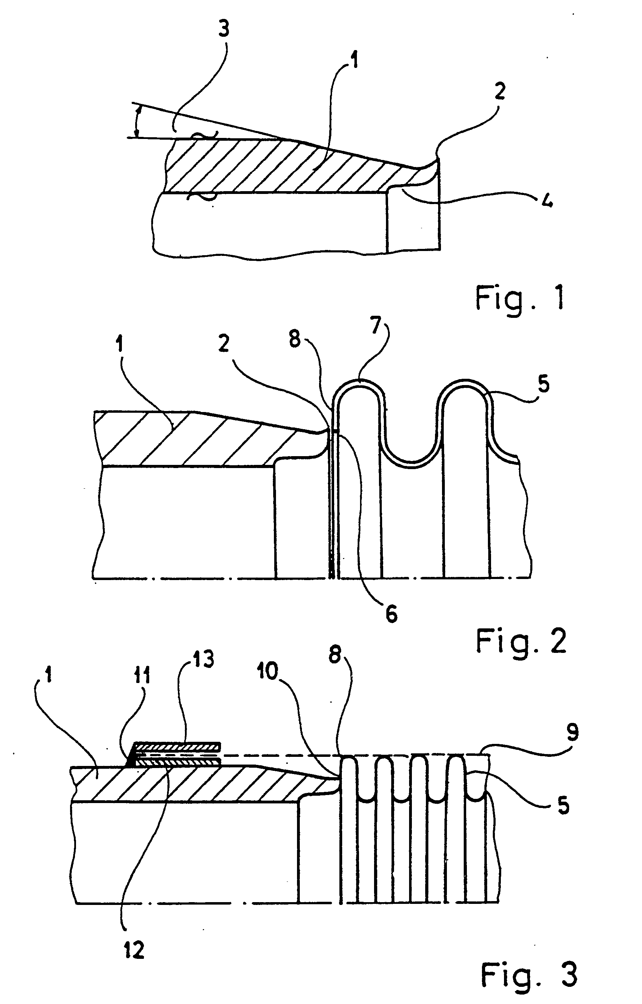

Figur 1 zeigt im teilweisen Halbschnitt ein hohlzylindrisches Anschlußstück 1 aus vorzugsweise korrosionsbeständigem Metall, das gegen seinen bezogen auf Figur 1 rechtes freies Ende hin zu einer schmalen Kante 2 verjüngt ausläuft, wobei diese Kante als aus der achsparallelen Erstreckung bogenförmig im wesentlich nach radial außen gerichtet auslaufender Bund ausgebildet ist. Die zur Kante 2 hin gegebene Querschnittsverjüngung des Anschlußstückes 1 ergibt sich auf dessen Außenseite durch eine unter dem Winkel 3 verlaufende konische Verjüngung, während auf der Innenseite der Querschnitt des Anschlußstückes 1 im Bereich des Bundes bzw. der Stirnkante 2 eine geringe Erweiterung 4 aufweist.

Wie aus Figur 2 ersichtlich, ist zur Herstellung einer gegenseitigen Schweißverbindung ein ringgewellter Metallschlauch 5 mit der nach radial innen gerichteten Kante 6 einer von einem Wellenberg 7 ausgehenden Wellenflanke 8 axial gegen die Kante 2 des Anschlußstückes 1 gesetzt. Hiervon ausgehend findet nunmehr in an sich bekannter Weise die gegenseitige Verschweißung im Schutzgasschweißverfahren ohne Zusatzwerkstoff statt, wobei der Wellschlauch 5 noch etwas weiter in Richtung auf das Anschlußstück 1 geschoben wird, so daß im Ergebnis ein harmonischer Übergang zwischen der Kante des Anschlußstückes 1 und der bezeichneten Flanke 8 des Wellschlauches 5 entsteht, wie dies aus Figur 3 ersichtlich ist.

Eine derartige Schweißverbindung bietet keinerlei Möglichkeit für die Bildung von Spalten oder Hohlräumen und somit für die Ausbildung einer Spaltkorrosion. Zum anderen vermeidet der erwähnte harmonische Übergang zwischen Anschlußstück 1 und Metallschlauch 5 jegliches Auftreten von Spannungsspitzen, was sich insbesondere bei schwingenden oder bewegenden Belastungen auswirkt, derentwegen der Metallschlauch 5 in der Regel in Rohrleitungen oder dergleichen eingebaut wird.

Wie aus Figur 3 ersichtlich, ist der Metallschlauch 5 außerdem von einer Metalldrahtumflechtung bzw. einem Geflechtsschlauch 9 umgeben. Dieser ist nunmehr mit Abstand gegenüber der Schweißnaht 10 zwischen Anschlußstück 1 und Metallschlauch 5 auf dem Außenmantel des Anschlußstückes 1 durch eine eigenständige Schweißnaht 11 festgelegt, wobei zur sicheren Fassung des Geflechtsschlauchendes dieses in zylindrischen Metallhülsen 12, 13 eingefaßt ist.

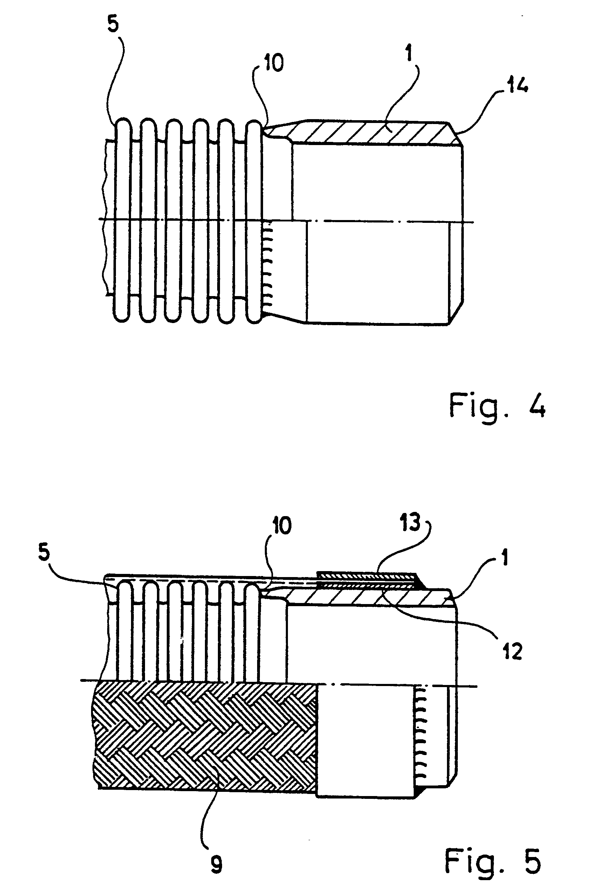

Figur 4 zeigt noch einmal entsprechend Figur 2 bzw. Figur 3 die Verbindung zwischen Anschlußstück 1 und Metallschlauch 5 in vollständiger Darstellung, wobei außerdem über die endständige Anfasung 14 ersichtlich ist, daß das Anschlußstück 1 ein sogenanntes Anschweißende zur weiteren Verbindung mit einem nicht dargestellten Bauteil sein kann.

Figur 5 zeigt die Darstellung gemäß Figur 4 ergänzt durch einen den Metallschlauch 5 umgebenden Geflechtsmantel 9 mit dessen Festlegung über Metallhülsen 12, 13 auf dem Außenmantel des Anschlußstückes 1, also im Abstand von der Verschweißung 10 zwischen Metallschlauch 5 und Anschlußstück 1.

## Patentansprüche

1. Schweißverbindung zwischen einem ringgewelltem Metallschlauch und einem im wesentlichen hohlzylindrischen Anschlußstück aus Metall, wobei das Schlauchende stirnseitig mit der ihm zugewandten Stirnkante des Anschlußstückes verbunden ist, dadurch gekennzeichnet, daß die Stirnkante (2) des Anschlußstückes (1) als sich gegen sein freies Ende hin zu einer schmalen Kante verjüngender und aus der achsparallelen Erstreckung bogenförmig im wesentlichen nach radial außen gerichtet auslaufender Bund ausgebildet ist und daß der Schlauch (5) mit der Kante (6) einer von einem Wellenberg (7) nach radial innen gerichteten Wellenflanke (8) mit der Stirnkante des Anschlußstückes im Schutzgasschweißverfahren verschweißt ist.

2. Schweißverbindung nach Anspruch 1, dadurch gekennzeichnet, daß der axiale Querschnitt der Kante (2) des Anschlußstückes (1) im wesentlichen der Wandstärke des Schlauches (5) entspricht.

3. Schweißverbindung nach Anspruch 1, dadurch gekennzeichnet, daß der Innendurchmesser des Anschlußstükkes (1) der lichten Weite des Schlauches (5) entspricht.

4. Schweißverbindung nach einem der Ansprüche 1 bis 3, dadurch gekennzeichnet, daß die Wandstärke des Anschlußstückes (1) sich axial in Richtung auf den Bund (2) bzw. die Stirnkante verjüngend ausgebildet ist.

5. Schweißverbindung nach Anspruch 4, dadurch gekennzeichnet, daß die äußere Mantelfläche des Anschlußstückes (1) sich in Richtung auf den Bund bzw. die Stirnkante konisch (Winkel 3) verjüngend ausgebildet ist.

6. Schweißverbindung nach Anspruch 4 oder 5, dadurch gekennzeichnet, daß der Innenquerschnitt des Anschlußstückes (1) im Bereich des Bundes bzw. der Stirnkante (2) eine geringe Erweiterung (4) aufweist.

7. Schweißverbindung nach einem der vorhergehenden Ansprüche, dadurch gekennzeichnet, daß die Ausbildung des Bundes bzw. der Stirnkante (2) auf der Innenseite eine Abrundung aufweist, die dem Rundungsverlauf eines Wellentales des Metallschlauches (5) entspricht.

8. Schweißverbindung nach einem der vorhergehenden Ansprüche, dadurch gekennzeichnet, daß bei einem mit einem Metalldrahtgeflecht (9) umgebenden Schlauch (5) das jeweilige Geflechtsende auf dem Anschlußstück (1) mit Abstand gegenüber der Verbindung (10) zwischen diesem und dem Schlauch (5) aufgeschweißt (11) ist.

9. Schweißverbindung nach Anspruch 8, dadurch gekennzeichnet, daß das Geflechtsende zwischen zylindrischen Metallhülsen (12, 13) gefaßt ist, die zugleich mit dem Anschlußstück (1) verschweißt (11) sind.

## Claims

1. Welded connection between an annularly corrugated metal hose and a substantially hollow-cylindrical attachment piece of metal, where the hose end is terminally connected with the end edge, facing it, of the attachment piece, characterised in that the end edge (2) of the attachment piece (1) is formed as a collar tapering towards its free end to a narrow edge and terminating directed substantially radially outwards out of the axially parallel extent, and in that the hose (5) is welded with the edge (6) of a corrugation flank (8), directed radially inwards from a corrugation crest (7), to the end edge of the attachment piece, by the shielded-arc welding process.

2. Welded connection according to Claim 1, characterised in that the axial cross-section of the edge (2) of the attachment piece (1) corresponds substantially to the wall thickness of the hose (5).

3. Welded connection according to Claim 1, characterised in that the internal diameter of the attachment piece (1) corresponds to the clear internal width of the hose (5).

4. Welded connection according to one of Claims 1 to 3, characterised in that the wall thickness of the attachment piece (1) is made tapering axially in the direction towards the collar (2) or the end edge.

5. Welded connection according to Claim 4, characterised in that the outer peripheral surface of the attachment piece (1) is made tapering conically (angle 3) in the direction towards the collar or the end edge.

6. Welded connection according to Claim 4 or 5, characterised in that the internal cross-section of the attachment piece (1) in the region of the collar or end edge (2) has a slight widening (4).

7. Welded connection according to one of the preceding Claims characterised in that the formation of the collar or the end edge (2) has a rounding on the inside which corresponds to the course of rounding of a corrugation trough of the metal hose (5).

8. Welded connection according to one of the preceding Claims, characterised in that in the case of a hose (5) surrounded with a metal wire braiding (9), in each case the braiding end is welded (11) on the attachment piece (1) withspacing from the connection (10) between the latter and the hose (5).

9. Welded connection according to Claim 8, characterised in that the braiding end is grasped between cylindrical metal sleeves (12, 13) which are at the same time also welded (11) to the attachment piece (11).

## Revendications

1. Joint soudé entre un tuyau métallique annelé et un raccord sensiblement en forme de cylindre creux, l'extrémité du tuyau étant raccordée frontalement au bord frontal, tourné vers cette extrémité, du raccord, caractérisé en ce que le bord frontal (2) du raccord (1) est réalisé sous la forme d'un collet qui se rétrécit en direction de son extrémité sous la forme d'un bord étroit et s'étend sensiblement radialement vers l'extérieur avec une forme d'arc de cercle à partir d'une direction d'extension parallèle à l'axe, et que le tuyau (5) est soudé, selon un procédé de soudage sous gaz protecteur, par le bord (6) d'un flanc d'ondulation (8) dirigé radialement vers l'intérieur à partir d'un sommet (7) de l'ondulation, au bord frontal du raccord.

2. Joint soudé selon la revendication 1, caractérisé en ce que la section transversale axiale du bord (2) du raccord (1) correspond essentiellement à l'épaisseur de la paroi du tuyau (5).

3. Joint soudé selon la revendication 1, caractérisé en ce que le diamètre intérieur du raccord (1) correspond au diamètre intérieur du tuyau (5).

4. Joint soudé selon l'une des revendications 1 à 3, caractérisé en ce que l'épaisseur de paroi du raccord (1) se rétrécit dans le sens axial en direction du collet (2) ou du bord frontal.

5. Joint soudé selon la revendication 4, caractérisé en ce que la surface enveloppe extérieure du raccord (1) se rétrécit avec une forme conique (angle 3) en direction du collet ou du bord frontal.

6. Joint soudé selon la revendication 4 ou 5, caractérisé en ce que la section transversale intérieure du raccord (1) possède dans la zone du collet ou du bord frontal (2), une partie légèrement élargie (4).

7. Joint soudé selon l'une des revendications précédentes, caractérisé en ce que la configuration du collet ou du bord frontal (2) sur le côté intérieur présente un arrondi qui correspond à l'arrondi d'un creux entre des ondulations du tuyau métallique (5).

8. Joint soudé selon l'une des revendications précédentes, caractérisé en ce que, dans le cas d'un tuyau (5) entouré par une tresse en fil métallique (9), l'extrémité respective de la tresse est soudée au raccord (1) à une certaine distance par rapport au joint (10) formé entre ce raccord et le tuyau (5).

9. Joint soudé selon la revendication 8, caractérisé en ce que l'extrémité de la tresse est enserrée entre les douilles métalliques cylindriques (12, 13), qui sont simultanément soudées au raccord (1).

Fig. 1

Fig. 2

Fig. 3

Fig. 4

Fig. 5